# EUROPÄISCHE PATENTSCHRIFT

(11) **EP 2 885 152 B1**
(45) Veröffentlichungstag und Bekanntmachung des Hinweises auf die Patenterteilung: **09.10.2019**
(21) Anmeldenummer: 13742254.9
(22) Anmeldetag: 31.07.2013
(51) Int. Cl.: B60K 37/06, G06F 3/0482

(54) **VERFAHREN ZUM ANZEIGEN VON INFORMATIONEN IN EINEM FAHRZEUG UND ANZEIGEEINRICHTUNG DAFÜR**
METHOD FOR DISPLAYING INFORMATION IN A VEHICLE AND DISPLAY DEVICE THEREFORE
PROCÉDÉ D'AFFICHAGE D'INFORMATIONS DANS UN VÉHICULE ET DISPOSITIF D'AFFICHAGE CORRESPONDANT

(30) Priorität: 15.08.2012 DE 102012016112
(43) Veröffentlichungstag der Anmeldung: 24.06.2015
(73) Patentinhaber: Volkswagen Aktiengesellschaft, 38440 Wolfsburg (DE)
(72) Erfinder: PETERSEN, Soenke, 12205 Berlin (DE); BUDZYNSKI, Tobias, 13503 Berlin (DE); LOU, Jian, 10707 Berlin (DE); KUHN, Mathias, 14129 Berlin (DE)
(86) Internationale Anmeldenummer: PCT/EP2013/066097
(87) Internationale Veröffentlichungsnummer: WO 2014/026850

(56) Entgegenhaltungen:
- DE-A1-102009 019 561
- DE-A1-102010 020 893

## Beschreibung

Die vorliegende Erfindung betrifft ein Verfahren zum Anzeigen von Informationen in einem Fahrzeug, bei dem mehrere Objekte von einer in dem Fahrzeug angeordneten Anzeigevorrichtung graphisch dargestellt werden. Ferner werden von einer Steuervorrichtung Graphikdaten erzeugt, welche die Anzeigevorrichtung so ansteuern, dass die graphischen Objekte auf einem virtuellen Band angeordnet dargestellt werden. Auf eine Eingabe mittels einer Eingabeeinrichtung verändert die Steuervorrichtung die Graphikdaten so, dass sich die Position der graphischen Objekte auf dem Band verschiebt. Des Weiteren betrifft die Erfindung eine Anzeigeeinrichtung für ein Fahrzeug mit einer Anzeigevorrichtung zur graphischen Darstellung von Informationen, die in dem Fahrzeug befestigt ist. Ferner umfass die Anzeigeeinrichtung eine Steuervorrichtung, mit welcher Graphikdaten für von der Anzeigevorrichtung darstellbare graphische Objekte erzeugbar sind, wobei die graphischen Objekte auf einem virtuellen Band angeordnet dargestellt sind und wobei eines der graphischen Objekte hervorgehoben dargestellt ist. Des Weiteren ist mit der Steuervorrichtung eine Eingabeeinrichtung so gekoppelt, dass auf eine Eingabe mittels der Eingabeeinrichtung die Steuervorrichtung die Graphikdaten so verändert, dass sich die Positionen der Objekte auf dem Band verschieben.

In einem Fahrzeug, insbesondere einem Kraftfahrzeug, gibt es eine Vielzahl von Funktionseinrichtungen, die erforderlich sind, um das Fahrzeug zu führen, die der Sicherheit und dem Komfort der Fahrzeuginsassen dienen und die den Fahrzeuginsassen schließlich Informationen und Warnungen anzeigen. Außerdem dienen die Funktionseinrichtungen der Kommunikation der Fahrzeuginsassen mit außerhalb des Fahrzeugs angeordneten Einrichtungen. Zu diesen Funktionseinrichtungen zählen beispielsweise Einrichtungen zum Steuern der lichttechnischen Einrichtungen des Fahrzeugs, eine Klimatisierungsvorrichtung, Fahrerassistenzsysteme, Navigationssysteme, Telekommunikationssysteme und Multimediasysteme. Um diese Funktionseinrichtungen zu bedienen ist zumindest eine Vorrichtung für Eingaben des Nutzers und eine Anzeigevorrichtung zum Darstellen von Informationsanzeigen der Funktionseinrichtungen erforderlich. Ferner wird die Bedienung der Funktionseinrichtungen häufig von Anzeigen auf einem Display unterstützt, welches beispielsweise in der Mittelkonsole des Fahrzeugs angeordnet ist.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Kraftfahrzeug eingesetzt, ergibt sich das Problem, dass die Navigation innerhalb dieser Menüstrukturen und die Aufnahme der von dem Display angezeigten Informationen die Aufmerksamkeit des Fahrers beeinträchtigen kann. Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Aus der DE 10 2007 039 442 A1 ist ein Verfahren und eine Anzeigeeinrichtung der eingangs genannten Art bekannt, bei denen die graphischen Objekte auf einem virtuellen, perspektivisch dargestellten Ring angeordnet dargestellt werden. Auf eine Eingabe mittels der Eingabeeinrichtung verändert eine Recheneinheit einer Benutzerschnittstelleneinrichtung die Graphikdaten so, dass sie sich die graphischen Objekte auf dem virtuellen Ring karussellartig drehen.

Aus der US 2009/0307633 A1 ist ein Medienwiedergabevorrichtung bekannt, bei welcher graphische Objekte, die den Medien zugeordnet sind, auf einer Anzeigefläche angezeigt werden. Solche Anzeigen von Mediendaten sind auch aus der US 2010/0058253 A1 und der US 2010/0131089 A1 sowie der US 2011/0010671 A1 bekannt.

Es ist die Aufgabe der vorliegenden Erfindung, ein Verfahren und eine Anzeigeeinrichtung der eingangs genannten Art bereitzustellen, bei denen die dargestellte Information so schnell und intuitiv wie möglich erfassbar ist und die eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und einer Anzeigeeinrichtung mit den Merkmalen des Anspruchs 7 gelöst. Vorteilhafte Aus- und Weiterbildungen ergeben sich aus den Unteransprüchen.

Das erfindungsgemäße Verfahren ist dadurch gekennzeichnet, dass nach einer Auswahl des hervorgehobenen graphischen Objekts die anderen graphischen Objekte als sichtbarer Stapel hinter dem ausgewählten graphischen Objekt dargestellt werden.

Das erfindungsgemäße Verfahren ist insbesondere für die Informationsdarstellung auf einer Anzeigefläche in einem Fahrzeug ausgebildet. Die Anzeigeflächen in Fahrzeugen sind häufig nämlich relativ klein, so dass die zur Verfügung stehende Anzeigefläche besonders gut ausgenutzt werden muss. Dabei ist jedoch zu berücksichtigen, dass insbesondere der Fahrer des Fahrzeugs die dargestellten Informationen auch dann wahrnehmen soll, wenn er nur kurzzeitig seinen Blick auf die Anzeigefläche richtet. Ferner soll ein Bedienvorgang, welcher von der Informationsanzeige unterstützt wird für die Bedingungen in einem Fahrzeug optimiert werden.

Bei dem erfindungsgemäßen Verfahren werden für die graphischen Objekte neben dem hervorgehobenen graphischen Objekt nur Teilansichten angezeigt. Hierdurch können zwar relativ viele graphische Objekte gleichzeitig angezeigt werden, der Platzbedarf auf einer Anzeigefläche wird jedoch durch die Darstellung der Teilansichten verringert.

Die Erfinder haben ferner erkannt, dass bei einem Bildlauf durch eine Liste, von der nur eine Teilmenge gleichzeitig als graphische Objekte dargestellt werden, der Nutzer eine Vorzugsrichtung hat. Aus diesem Grund ist die asymmetrische Darstellung der graphischen Objekte hinsichtlich einem hervorgehobenen graphischen Objekt vorteilhaft, da sie dem Betrachter auf einer Seite des hervorgehobenen graphischen Objekts mehr Information bereitstellt als auf der anderen Seite. Erfolgt beispielsweise ein Bildlauf auf der Richtung, bei welcher die größere Teilmenge der graphischen Objekte neben dem hervorgehobenen graphischen Objekt dargestellt ist, wird die Informationsdarstellung für den Betrachter verbessert. Der Nutzer kann somit ein bestimmtes graphisches Objekt bei einem Bildlauf schneller finden.

Gemäß einer weiteren Ausgestaltung des erfindungsgemäßen Verfahrens sind die graphischen Objekte Darstellungen von Flächen im Raum. Das hervorgehobene graphische Objekt wird insbesondere in einer Aufsicht dargestellt. Beispielsweise kann ein Quadrat, ein Rechteck oder eine andere geometrische Form angezeigt werden. Die anderen graphischen Objekte der ersten und zweiten Teilmenge sind insbesondere bei dem erfindungsgemäßen Verfahren perspektivische Darstellungen der Flächen im Raum. Hierdurch wird vorteilhafterweise die Erfassbarkeit der Unterscheidung zwischen dem hervorgehobenen graphischen Objekt und den anderen graphischen Objekten erleichtert. Des Weiteren wird der Platzbedarf für die Darstellung der anderen graphischen Objekte verringert, da eine perspektivische Darstellung beispielsweise einer schrägen Ansicht eines Quadrats oder Rechtecks weniger Platz benötigt als die Aufsicht dieser Fläche.

Die erste Teilmenge umfasst insbesondere ein einziges graphisches Objekt. Die Anzahl der graphischen Objekte der zweiten Teilmenge ist insbesondere größer als drei, bevorzugt in einem Bereich zwischen vier und acht. Es hat sich herausgestellt, dass bei der Darstellung solcher graphischen Objekte insbesondere durch eine Anzeigevorrichtung in einem Fahrzeug diese Bereiche für die Anzahl der Objekte besonders gut insbesondere vom Fahrer des Fahrzeugs erfasst werden können.

Gemäß einer Weiterbildung des erfindungsgemäßen Verfahrens werden die Flächen der graphischen Objekte der ersten und zweiten Teilmenge teilweise verdeckt von den Flächen anderer graphischer Objekte dargestellt. Hierdurch wird die Unterscheidung des hervorgehobenen graphischen Objekts von den anderen graphischen Objekten erleichtert. Ferner wird der Platzbedarf für die Darstellung der graphischen Objekte durch die verdeckte Darstellung der Flächen dieser graphischen Objekte verringert.

Beim Verschieben der Positionen der graphischen Objekte auf dem Band werden die Objekte beispielsweise nacheinander zu der jeweils benachbarten Position verschoben. Da üblicherweise nur ein Teil der Objekte einer größeren Liste von der Anzeigevorrichtung dargestellt werden kann, verschwindet bei einem solchen Bildlauf bei jeder Positionsveränderung ein bisher angezeigtes Objekt und ein neues Objekt erscheint.

Gemäß einer Ausgestaltung des erfindungsgemäßen Verfahrens erfolgt die Eingabe durch eine Berührung einer berührungsempfindlichen Oberfläche, die auf der Anzeigefläche der Anzeigevorrichtung ausgebildet ist, und eine Streichbewegung in Richtung der Erstreckung des virtuellen Bandes. Die Anzeigevorrichtung umfasst in diesem Fall somit einen sogenannten Touchscreen. Diese Art der Eingabe ist für den Nutzer besonders intuitiv.

Gemäß einer anderen Ausgestaltung des erfindungsgemäßen Verfahrens erfolgt die Eingabe durch eine Geste eines Körperteils eines Nutzers, welche vor einer Anzeigefläche der Anzeigevorrichtung ausgeführt wird. Diese Geste wird von der Eingabeeinrichtung erfasst und ausgewertet.

Gemäß einer weiteren Ausgestaltung des erfindungsgemäßen Verfahrens bleibt nach einer Auswahl des hervorgehobenen graphischen Objekts mittels der Eingabeeinrichtung die Darstellung und Anordnung des ausgewählten graphischen Objekts unverändert. Die Darstellung und Anordnung der anderen graphischen Objekte verändern sich hingegen.

Die erfindungsgemäße Anzeigeeinrichtung ist dadurch gekennzeichnet, dass nach einer Auswahl des hervorgehobenen graphischen Objekts die anderen graphischen Objekte als sichtbarer Stapel hinter dem ausgewählten graphischen Objekt dargestellt werden.

Die erfindungsgemäße Anzeigeeinrichtung dient insbesondere dem Ausführen des erfindungsgemäßen Verfahrens. Sie weist somit auch dieselbe Vorteile wie das erfindungsgemäße Verfahren auf.

Die Eingabeeinrichtung der erfindungsgemäßen Anzeigeeinrichtung umfasst insbesondere eine berührungsempfindliche Oberfläche auf einer Anzeigefläche der Anzeigevorrichtung. Alternativ oder zusätzlich kann die Eingabeeinrichtung eine Einrichtung zum Erfassen und Auswerten einer Geste eines Körperteils eines Nutzers umfassen, welche vor der Anzeigefläche ausgeführt wird.

Die Erfindung wird nun an Hand eines Ausführungsbeispiels mit Bezug zu den Zeichnungen erläutert.
- Figur 1: zeigt schematisch ein Ausführungsbeispiel der erfindungsgemäßen Anzeigeeinrichtung und die Koppelung dieser Anzeigeeinrichtung mit der Elektronik des Fahrzeugs,
- Figur 2: zeigt eine von dem erfindungsgemäßen Verfahren erzeugte Informationsanzeige in einem Fahrzeug, bei der mehrere Objekte dargestellt werden,
- Figur 3: zeigt eine von dem erfindungsgemäßen Verfahren erzeugte Informationsanzeige eines ausgewählten Objekts.

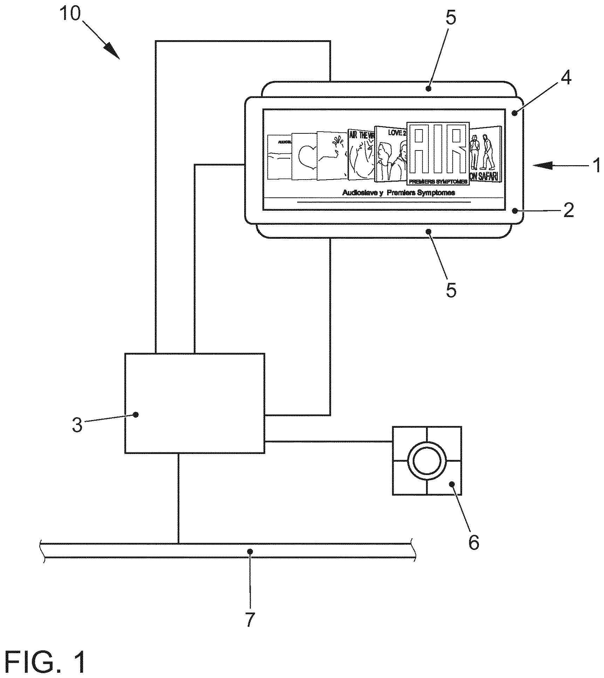

Mit Bezug zu Figur 1 wird ein Ausführungsbeispiel der erfindungsgemäßen Anzeigeeinrichtung 10 und deren Anordnung in einem Fahrzeug erläutert:
Die Anzeigeeinrichtung 10 umfasst eine Anzeigevorrichtung 1 mit einer Anzeigefläche 2, die so im Innenraum des Fahrzeugs angeordnet ist, dass sie für zumindest einen Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden.

Die Anzeigeeinrichtung 10 umfasst ferner eine Steuervorrichtung 3, die mit der Anzeigevorrichtung 1 verbunden ist. Mit der Steuervorrichtung 3 sind Graphikdaten zur Informationsdarstellung auf der Anzeigefläche 2 erzeugbar.

Die Anzeigeeinrichtung 10 weist außerdem eine Eingabeeinrichtung auf. Diese Eingabeeinrichtung kann beispielsweise eine berührungsempfindliche Oberfläche 4 umfassen, die auf der Anzeigefläche 2 ausgebildet ist. In diesem Fall wird somit ein sogenannter Touchscreen bereitgestellt.

Ferner kann die Eingabeeinrichtung eine Gestenerfassungseinrichtung 5 umfassen, mit der Gesten eines Nutzers in einem Erfassungsraum erfasst und ausgewertet werden können. Dieser Erfassungsraum ist insbesondere in einem Bereich vor der Anzeigefläche 2 ausgebildet. Der Nutzer kann in dem Erfassungsraum bestimmte Gesten ausführen, die von der Gestenerfassungseinrichtung 5 und der Steuervorrichtung 3 in Steuerbefehle umgesetzt werden.

Schließlich kann die Eingabeeinrichtung noch ein abgesetztes mechanisches Bedienelement 6, wie beispielsweise einen Dreh-Drück-Schalter, umfassen.

Die Steuervorrichtung 3 ist ferner mit einem Datenbus 7 des Fahrzeugs gekoppelt, über den Daten mit anderen Funktionseinrichtungen des Fahrzeugs ausgetauscht werden können. Beispielsweise kann die Steuervorrichtung 3 über den Datenbus 7 mit einer Multimediaeinrichtung des Fahrzeugs gekoppelt sein, zu der Informationen auf der Anzeigefläche 2 angezeigt werden und deren Bedienung durch Anzeigen auf der Anzeigefläche 2 unterstützt werden.

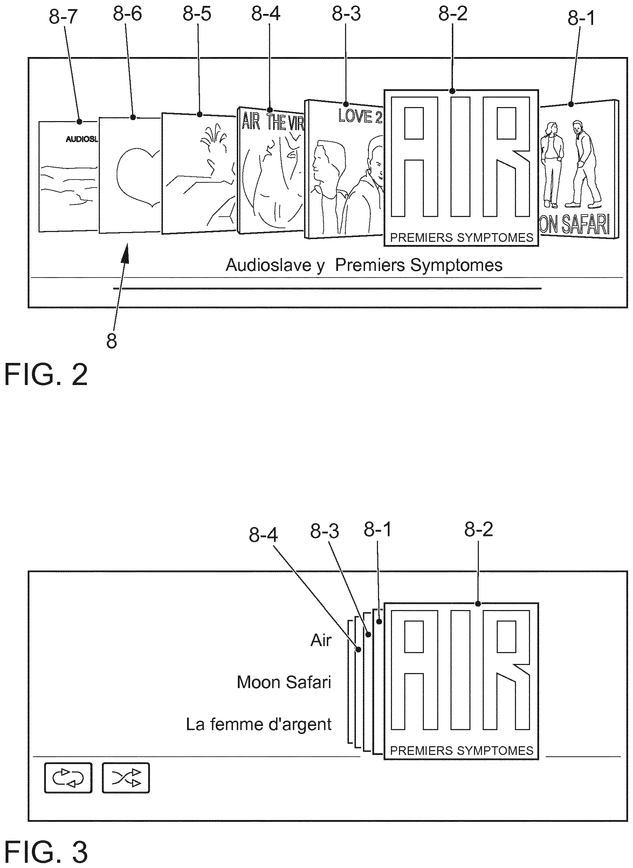

Im Folgenden wird mit Bezug zu den Figuren 2 und 3 ein Ausführungsbeispiel des erfindungsgemäßen Verfahrens erläutert, welches mittels der vorstehend beschriebenen Anzeigeeinrichtung 10 ausgeführt werden kann:
Von der Steuervorrichtung 3 werden für die Anzeige auf der Anzeigefläche 2 Graphikdaten erzeugt, so dass die in Figur 2 gezeigte Anzeige auf der Anzeigefläche 2 angezeigt wird. Auf einem virtuellen Band werden nebeneinander die graphischen Objekte 8-1 bis 8-7 dargestellt. Diese graphischen Objekte 8-1 bis 8-7 werden auch zusammengefasst als graphische Objekte 8 bezeichnet. Im vorliegenden Fall handelt es sich bei den graphischen Objekten 8 um Darstellungen von CD-Covern.

Unter einer Anordnung auf einem virtuellen Band wird dabei verstanden, dass die graphischen Objekte 8 auf einer geraden Linie angeordnet sind, die sich beispielsweise, wie in Figur 2 gezeigt, von links nach rechts erstreckt. Die Linie kann sich allerdings auch von oben nach unten oder schräg über die Anzeigefläche 2 erstrecken.

Bei den graphischen Objekten 8 handelt es sich um im Wesentlichen quadratische Flächen, die auf der Anzeigefläche 2 perspektivisch im Raum dargestellt werden. Bei dem in Figur 2 gezeigten Beispiel wird das graphische Objekt 8-2 hervorgehoben dargestellt. Es wird eine Aufsicht auf die Fläche dieses graphischen Objekts 8-2 gezeigt, so dass im Wesentlichen ein Quadrat sichtbar ist. In der Darstellung auf dem virtuellen Band wird das hervorgehobene graphische Objekt 8-2 nicht in der Mitte, sondern außermittig dargestellt. Auf einer Seite des hervorgehobenen graphischen Objekts 8-2, bei dem in Figur 2 gezeigten Beispiel auf der linken Seite, wird neben dem hervorgehobenen graphischen Objekt 8-2 eine erste Teilmenge mit graphischen Objekten 8-3 bis 8-7 dargestellt. Von den Flächen dieser graphischen Objekte 8-3 bis 8-7 wird jedoch keine Aufsicht dargestellt. Vielmehr werden diese graphischen Objekte 8-3 bis 8-7 in einer schrägen Ansicht perspektivisch dargestellt, so dass sie auf der Anzeigefläche 2 weniger Platz einnehmen. Des Weiteren ist jedes der graphischen Objekte 8-3 bis 8-7 dieser ersten Teilmenge so dargestellt, dass es von einem anderen graphischen Objekt 8 zum Teil verdeckt wird. Bei dem in Figur 2 gezeigten Beispiel verdeckt jeweils die Fläche des rechten graphischen Objekts 8 einen Teil der Fläche des benachbarten linken graphischen Objekts 8.

Auf der gegenüberliegenden Seite des hervorgehobenen graphischen Objekts 8-2, das heißt bei dem in Figur 2 gezeigten Beispiel auf der rechten Seite, wird eine zweite Teilmenge mit einem graphischen Objekt 8 oder mehreren graphischen Objekten 8 dargestellt. In dem in Figur 2 gezeigten Beispiel wird auf der rechten Seite neben dem hervorgehobenen graphischen Objekt 8-2 nur noch ein einziges graphisches Objekt 8-1 dargestellt, welches auch in einer schrägen Ansicht perspektivisch die Fläche dieses graphischen Objekts 8-1 anzeigt, die außerdem zum Teil von dem hervorgehobenen graphischen Objekt 8-2 verdeckt wird.

Insgesamt ergibt sich somit eine asymmetrische Darstellung der graphischen Objekte 8, bei der auf einer Seite neben einem hervorgehobenen graphischen Objekt 8-2 eine größere Anzahl anderer graphischen Objekte 8 dargestellt, als auf der anderen Seite.

Auf der Anzeigefläche 2 wird nur ein Teil der Objekte einer größeren Liste graphisch dargestellt. Um einen Bildlauf durch diese Liste zu erzeugen, kann der Nutzer auf der berührungsempfindlichen Oberfläche 4 der Anzeigefläche 2 eine Streichgeste ausführen, bei welcher er mit seiner Fingerspitze auf der berührungsempfindlichen Oberfläche 4 von rechts nach links oder von links nach rechts streicht. Alternativ kann er vor der Anzeigefläche 2 eine Winkgeste nach rechts oder nach links ausführen, ohne die berührungsempfindliche Oberfläche 4 zu berühren. Diese Geste wird von der Gestenerfassungseinrichtung 5 erfasst.

Es hat sich herausgestellt, dass bei den Gesten für einen solchen Bildlauf es zumeist eine Hauptwischrichtung gibt. Bei dem vorliegenden Ausführungsbeispiel wurde davon ausgegangen, dass die Hauptwischrichtung von links nach rechts ist. Aus diesem Grund umfasst die Teilmenge mit graphischen Objekten 8 auf der linken Seite neben dem hervorgehobenen graphischen Objekt 8-2 mehr graphische Objekte als die Teilmenge auf der rechten Seite. Der Nutzer kann somit vor dem Ausführen der Wischgeste eine größere Anzahl von den graphischen Objekten 8 erkennen, die bei der Wischgeste in Richtung des hervorgehobenen graphischen Objekts 8-2 bewegt werden.

Durch die vorstehend beschriebene Wischgeste verändern sich die Positionen der graphischen Objekte 8 nacheinander um jeweils eine Position nach rechts oder nach links. Entsprechend werden auch nacheinander andere graphische Objekte 8 hervorgehoben dargestellt. Gleichzeitig verschwindet bei einer Wischbewegung von links nach rechts auf der rechten Seite das äußerste graphische Objekt 8 und es erscheint ein neues graphisches Objekt auf der linken Seite. Bei der entgegengesetzten Wischgeste verschwinden bzw. erscheinen auf den jeweils anderen Seiten graphische Objekte.

Des Weiteren kann das hervorgehoben dargestellte graphische Objekt 8-2 mittels der Eingabeeinrichtung, zum Beispiel durch Antippen der berührungsempfindlichen Oberfläche 4 im Bereich der Anzeige dieses graphischen Objekts 8-2, ausgewählt werden. In diesem Fall erzeugt die Steuervorrichtung 3 Graphikdaten für eine Animation für einen Übergang von der in Figur 2 gezeigten Anzeige auf der Anzeigefläche 2 zu der in Figur 3 gezeigten Anzeige auf der Anzeigefläche 2. Das ausgewählte und hervorgehobene graphische Objekt 8-2 wird unverändert dargestellt und bleibt auch bei derselben Position. Die anderen graphischen Objekte 8-1 und 8-3 bis 8-7 wandern hinter das hervorgehoben dargestellte graphische Objekt 8-2, so dass sie als sichtbarer Stapel hinter dem ausgewählten graphischen Objekt 8-2 dargestellt werden, wie es in Figur 3 gezeigt ist. Der Stapel wird dabei perspektivisch dargestellt, so dass die Ränder der Flächen der anderen graphischen Objekte 8 hinter dem ausgewählten graphischen Objekt 8-2 dargestellt sind. Dabei können in dem Stapel alle vorher angezeigten graphischen Objekte 8 mit ihren Randflächen angezeigt werden oder nur ein Teil dieser graphischen Objekte 8.

### Bezugszeichenliste

- 1: Anzeigevorrichtung
- 2: Anzeigefläche
- 3: Steuervorrichtung
- 4: berührungsempfindliche Oberfläche
- 5: Gestenerfassungseinrichtung
- 6: abgesetztes Bedienelement
- 7: Datenbus
- 8, 8-1 bis 8-7: graphische Objekt
- 10: Anzeigeeinrichtung

## Patentansprüche

1. Verfahren zum Anzeigen von Informationen in einem Fahrzeug, bei dem
- mehrere Objekte (8) von einer in dem Fahrzeug angeordneten Anzeigevorrichtung (1) graphisch dargestellt werden,
- von einer Steuervorrichtung (3) Graphikdaten erzeugt werden, welche die Anzeigevorrichtung (1) so ansteuern, dass die graphischen Objekte (8) auf einem virtuellen Band angeordnet dargestellt werden, und
- auf eine Eingabe mittels einer Eingabeeinrichtung (4, 5, 6) die Steuervorrichtung (3) die Graphikdaten so verändert, dass sich die Positionen der graphischen Objekte (8) auf dem Band verschieben, wobei
- eines (8-2) der graphischen Objekte (8) hervorgehoben dargestellt wird,
- auf einer ersten Seite neben dem hervorgehobenen graphischen Objekt (8-2) eine erste Teilmenge der graphischen Objekte (8), die zumindest zwei graphische Objekte (8-3 bis 8-7) umfasst, mit Teilansichten der graphischen Objekte (8-3 bis 8-7) dargestellt wird, und
- auf einer zweiten gegenüberliegenden Seite neben dem hervorgehobenen graphischen Objekt (8-2) eine zweite Teilmenge der graphischen Objekte (8), die zumindest ein graphisches Objekt (8-1) umfasst, mit einer Teilansicht des graphischen Objekts (8-1) oder Teilansichten der graphischen Objekte (8) dargestellt wird,
- wobei die erste Teilmenge kleiner als die zweite Teilmenge ist, so dass die graphischen Objekte (8) asymmetrisch dargestellt werden, und
- wobei nach einer Auswahl des hervorgehobenen graphischen Objekts (8-2) mittels der Eingabeeinrichtung (4, 5, 6) sich die Darstellung und Anordnung der anderen graphischen Objekte (8-1, 8-3 bis 8-7) verändert,
**dadurch gekennzeichnet, dass** nach einer Auswahl des hervorgehobenen graphischen Objekts (8-2) die anderen graphischen Objekte (8-1, 8-3 bis 8-7) als sichtbarer Stapel hinter dem ausgewählten graphischen Objekt (8-2) dargestellt werden.

2. Verfahren nach Anspruch 1,
**dadurch gekennzeichnet,**
**dass** die graphischen Objekte (8) Darstellungen von Flächen im Raum sind, dass das hervorgehobene graphische Objekt (8-2) in einer Aufsicht dargestellt wird und dass die graphischen Objekte (8-1, 8-3 bis 8-7) der ersten und zweiten Teilmenge perspektivische Darstellungen der Flächen im Raum sind.

3. Verfahren nach Anspruch 1 oder 2,
**dadurch gekennzeichnet,**
**dass** die erste Teilmenge ein einziges graphisches Objekt (8-1) umfasst und die Anzahl der graphischen Objekte (8-3 bis 8-7) der zweiten Teilmenge größer als drei ist.

4. Verfahren nach Anspruch 2 oder 3,
**dadurch gekennzeichnet,**
**dass** die Flächen der graphischen Objekte (8-1, 8-3 bis 8-7) der ersten und zweiten Teilmenge teilweise verdeckt von den Flächen anderer graphischer Objekte (8) dargestellt werden.

5. Verfahren nach einem der vorhergehenden Ansprüche
**dadurch gekennzeichnet,**
**dass** beim Verschieben der Positionen der graphischen Objekte (8) auf dem Band die graphischen Objekte (8) nacheinander zu der jeweils benachbarten Position verschoben werden und bei jeder Positionsveränderung ein neues Objekt (8) erscheint und ein bisher angezeigtes Objekt (8) verschwindet.

6. Verfahren nach einem der vorhergehenden Ansprüche,
**dadurch gekennzeichnet,**
**dass** nach einer Auswahl des hervorgehobenen graphischen Objekts (8-2) mittels der Eingabeeinrichtung (4, 5, 6) die Darstellung und Anordnung des ausgewählten graphischen Objekts (8-2) unverändert bleibt und sich die Darstellung und Anordnung der anderen graphischen Objekte (8-1, 8-3 bis 8-7) verändert.

7. Anzeigeeinrichtung (10) für ein Fahrzeug mit
- einer Anzeigevorrichtung (1) zur graphischen Darstellung von Informationen, die in dem Fahrzeug befestigt ist,
- einer Steuervorrichtung (3), mit welcher Graphikdaten für auf der Anzeigevorrichtung (1) darstellbare graphische Objekte (8) erzeugbar sind, wobei die graphischen Objekte (8) auf einem virtuellen Band angeordnet dargestellt sind und wobei eines der graphischen Objekte (8-2) hervorgehoben dargestellt ist, und
- einer mit der Steuervorrichtung (3) gekoppelten Eingabeeinrichtung (4, 5, 6), die so mit der Steuervorrichtung (3) gekoppelt ist, dass auf eine Eingabe mittels der Eingabeeinrichtung (4, 5, 6), die Steuervorrichtung (3) die Graphikdaten so verändert, dass sich die Positionen der graphischen Objekte (8) auf dem Band verschieben, wobei
- von der Steuervorrichtung (3) Graphikdaten erzeugbar sind, welche die Anzeigevorrichtung (1) so ansteuern,
- dass auf einer ersten Seite neben dem hervorgehobenen graphischen Objekt (8-2) eine erste Teilmenge der graphischen Objekte (8), die zumindest zwei graphische Objekte (8-3 bis 8-7) umfasst, mit Teilansichten der graphischen Objekte (8-3 bis 8-7) dargestellt ist, und
- dass auf einer zweiten gegenüberliegenden Seite neben dem hervorgehobenen graphischen Objekt (8-2) eine zweite Teilmenge der graphischen Objekte (8), die zumindest ein graphisches Objekt (8-1) umfasst, mit einer Teilansicht des graphischen Objekts (8-1) oder Teilansichten der graphischen Objekte (8) dargestellt ist,
- wobei die erste Teilmenge kleiner als die zweite Teilmenge ist, so dass die graphischen Objekte (8) asymmetrisch dargestellt sind, und wobei
- nach einer Auswahl des hervorgehobenen graphischen Objekts (8-2) mittels der Eingabeeinrichtung (4, 5, 6) sich die Darstellung und Anordnung der anderen graphischen Objekte (8-1, 8-3 bis 8-7) verändert,
**dadurch gekennzeichnet,**
**dass** nach einer Auswahl des hervorgehobenen graphischen Objekts (8-2) die anderen graphischen Objekte (8-1, 8-3 bis 8-7) als sichtbarer Stapel hinter dem ausgewählten graphischen Objekt (8-2) dargestellt werden.

8. Anzeigeeinrichtung (10) nach Anspruch 7,
**dadurch gekennzeichnet,**
**dass** die Eingabeeinrichtung (4, 5, 6) eine berührungsempfindliche Oberfläche (4) auf einer Anzeigefläche (2) der Anzeigevorrichtung (1) umfasst.

9. Anzeigeeinrichtung (10) nach Anspruch 7 oder 8,
**dadurch gekennzeichnet,**
**dass** die Eingabeeinrichtung (4, 5, 6) eine Einrichtung (5) zum Erfassen und Auswerten einer Geste eines Körperteils eines Nutzers umfasst, welche vor der Anzeigefläche (2) der Anzeigevorrichtung (1) ausgeführt wird.

## Claims

1. A method for displaying information in a vehicle, in which
- a plurality of objects (8) are graphically displayed by a display apparatus (1) arranged in the vehicle,
- graphic data are displayed by a control device (3), that activates the display apparatus (1) so that the graphic objects (8) are displayed arranged on a virtual tape, and
- upon an input by means of an input device (4, 5, 6) the control device (3) modifies the graphic data such that the positions of the graphic objects (8) on the tape shift, wherein
- one (8-2) of the graphic objects (8) is displayed in a highlighted manner,
- on a first page next to the highlighted graphic object (8-2), a first portion of the graphic objects (8), which comprises at least two graphic objects (8-3 to 8-7), is displayed along with partial views of the graphic objects (8-3 to 8-7), and
- on a second opposite page next to the highlighted graphic object (8-2), a second portion of the graphic objects (8), which comprises at least one graphic object (8-1), is displayed along with a partial view of the graphic object (8-1) or along with partial views of the graphic objects (8),
- wherein the first portion is smaller than the second portion, so that the graphic objects (8) are asymmetrically displayed, and
- wherein after a selection of the highlighted graphic object (8-2) by means of the input device (4, 5, 6) the representation and arrangement of the other graphic objects (8-1, 8-3 to 8-7) change,
**characterized in that**
after a selection of the highlighted graphic object (8-2) the other graphic objects (8-1, 8-3 to 8-7) are displayed as a visible stack behind the selected graphic object (8-2).

2. The method according to Claim 1,
**characterized in**
**that** the graphic objects (8) are representations of surfaces in the space, that the highlighted graphic object (8-2) is displayed in a top view and that the graphic objects (8-1, 8-3 to 8-7) of the first and second portions are perspective representations of the surfaces in the space.

3. The method according to Claim 1 or 2,
**characterized in**
**that** the first portion comprises a single graphic object (8-1) and the number of graphic objects (8-3 to 8-7) of the second portion is greater than three.

4. The method according to Claim 2 or 3,
**characterized in**
**that** the surfaces of the graphic objects (8-1, 8-3 to 8-7) of the first and second portion are displayed partially covered by the surfaces of other graphic objects (8).

5. The method according to any one of the preceding claims,
**characterized in**
**that** when the positions of the graphic objects (8) are shifted on the tape, the graphic objects (8) are shifted one after another to the in each case adjacent position and at each change in position a new object (8) appears and a previously displayed object (8) disappears.

6. The method according to any one of the preceding claims,
**characterized in**
**that** after a selection of the highlighted graphic object (8-2) by means of the input device (4, 5, 6) the representation and arrangement of the selected graphic object (8-2) remains unchanged and the representation and arrangement of the other graphic objects (8-1, 8-3 to 8-7) changes.

7. A display device (10) for a vehicle having
- a display apparatus (1) for the graphic display of information, which is mounted in the vehicle,
- a control device (3) with which graphic data for graphic objects (8) displayable on the display apparatus (1) can be generated, wherein the graphic objects (8) are displayed arranged on a virtual tape and wherein one of the graphic objects (8-2) is displayed in a highlighted manner, and
- an input device (4, 5, 6) coupled with the control device (3), which is coupled with the control device (3) such that upon an input by means of the input device (4, 5, 6), the control device (3) changes the graphic data so that the positions of the graphic objects (8) on the tape shift, wherein
- graphic data can be generated by the control device (3), which data activate the display apparatus (1) such
- that on the first page next to the highlighted graphic object (8-2) a first portion of the graphic objects (8), which comprises at least two graphic objects (8-3 to 8-7), is displayed along with partial views of the graphic objects (8-3 to 8-7), and
- that on a second opposite page next to the highlighted graphic object (8-2) a second portion of the graphic objects (8), which comprises at least one graphic object (8-1), is displayed along with a partial view of the graphic object (8-1) or partial views of the graphic objects (8),
- wherein the first portion is smaller than the second portion, so that the graphic objects (8) are asymmetrically displayed, and wherein
- after a selection of the highlighted graphic object (8-2) by means of the input device (4, 5, 6) the representation and arrangement of the other graphic objects (8-1, 8-3 to 8-7) changes,
**characterized in that**
after a selection of the highlighted graphic object (8-2) the other graphic objects (8-1, 8-3 to 8-7) are displayed as a visible stack behind the selected graphic object (8-2).

8. The display device (10) according to Claim 7,
**characterized in**
**that** the input device (4, 5, 6) comprises a touch-sensitive surface (4) on a display surface (2) of the display apparatus (1).

9. The display device (10) according to Claim 7 or 8,
**characterized in**
**that** the input device (4, 5, 6) comprises a device (5) for detecting and evaluating a gesture of a body part of a user, which is made in front of the display surface (2) of the display apparatus (1).

## Revendications

1. Procédé d'affichage d'informations dans un véhicule, dans lequel
- plusieurs objets (8) sont représentés graphiquement dans un dispositif d'affichage (1) disposé dans le véhicule,
- des données graphiques, qui contrôlent le dispositif d'affichage (1) de façon à ce que les objets graphiques (8) soient représentés de façon à être disposée sur un ruban virtuel, sont générées par un dispositif de commande (3) et
- lors d'une entrée au moyen d'un dispositif d'entrée (4, 5, 6), le dispositif de commande (3) modifie les données graphiques de façon à ce que les positions des objets graphiques (8) se déplacent sur le ruban,
- un (8-2) des objets graphiques (8) est représenté de façon à être mis en évidence,
- sur un premier côté à proximité de l'objet graphique mis en évidence (8-2), une première partie des objets graphiques (8), qui comprend au moins deux objets graphiques (8-3 à 8-7), sont représentés avec des vues partielles des objets graphiques (8-3 à 8-7) et
- sur un deuxième côté opposé à proximité de l'objet graphique mis en évidence (8-2), une deuxième partie des objets graphiques (8), qui comprend au moins un objet graphique (8-1), sont représentés avec une vue partielle de l'objet graphique (8-1) ou des vues partielles des objets graphiques (8),
- la première partie étant plus petite que la deuxième partie, de façon à ce que les objets graphiques (8) soient représentés de manière asymétrique et
- la représentation et la disposition des autres objets graphiques (8-1, 8-3 à 8-7) changeant après une sélection de l'objet graphique mis en évidence (8-2) au moyen du dispositif d'entrée (4, 5, 6),
**caractérisé en ce que**
après une sélection de l'objet graphique mis en évidence (8-2), les autres objets graphiques (8-1, 8-3 à 8-7) sont représentés sous la forme d'un empilement visible derrière l'objet graphique mis en évidence (8-2).

2. Procédé selon la revendication 1,
**caractérisé en ce que**
les objets graphiques (8) sont des représentations de surfaces dans l'espace, **en ce que** l'objet graphique mis en évidence (8-2) est représenté en vue de dessus et **en ce que** les objets graphiques (8-1, 8-3 à 8-7) de la première et de la deuxième partie sont des représentations en perspective des surfaces dans l'espace.

3. Procédé selon la revendication 1 ou 2,
**caractérisé en ce que**
la première partie comprend un seul objet graphique (8-1) et le nombre d'objets graphiques (8-3 à 8-7) de la deuxième partie est supérieur à trois.

4. Procédé selon la revendication 2 ou 3,
**caractérisé en ce que**
les surfaces des objets graphiques (8-1, 8-3 à 8-7) de la première et de la deuxième partie sont représentées de manière recouverte partiellement par les surfaces d'autres objets graphiques (8).

5. Procédé selon l'une des revendications précédentes,
**caractérisé en ce que**
lors du décalage des positions des objets graphiques (8) sur le ruban, les objets graphiques (8) sont décalés les un après les autres vers la position respectivement adjacente et, lors de chaque changement de position, un nouvel objet (8) apparaît et un objet (8) auparavant affiché disparaît.

6. Procédé selon l'une des revendications précédentes,
**caractérisé en ce que**
après une sélection de l'objet graphique mis en évidence (8-2) au moyen du dispositif d'entrée (4, 5, 6), la représentation et la disposition de l'objet graphique sélectionné (8-2) reste inchangée et la représentation et la disposition des autres objets graphiques (8-1, 8-3 à 8-7) change.

7. Dispositif d'affichage (10) pour un véhicule avec
- un dispositif d'affichage (1) pour la représentation graphique d'informations, qui est fixé dans le véhicule,
- un dispositif de commande (3) avec lequel des données graphiques peuvent être générées pour des objets graphiques (8) pouvant être représentés sur le dispositif d'affichage (1), les objets graphiques (8) étant représentés de manière disposée sur un ruban virtuel et un des objets graphiques (8-2) étant mis en évidence et
- un dispositif d'entrée (4, 5, 6) couplé avec le dispositif de commande (3), qui est couplé avec le dispositif de commande (3) de façon à ce que, lors d'une entrée au moyen du dispositif d'entrée (4, 5, 6), le dispositif de commande (3) modifie les données graphiques de façon à ce que les positions des objets graphiques (8) se décalent sur le ruban,
- des données graphiques, qui contrôlent le dispositif d'affichage (1) de façon à ce que
- sur un premier côté à proximité de l'objet graphique mis en évidence (8-2), une première partie des objets graphiques (8), qui comprend au moins deux objets graphiques (8-3 à 8-7), soient représentés avec des vues partielles des objets graphiques (8-3 à 8-7) et
- sur un deuxième côté opposé à proximité de l'objet graphique mis en évidence (8-2), une deuxième partie des objets graphiques (8), qui comprend au moins un objet graphique (8-1), soient représentés avec une vue partielle de l'objet graphique (8-1) ou des vues partielles des objets graphiques (8),
- la première partie étant plus petite que la deuxième partie, de façon à ce que les objets graphiques (8) soient représentés de manière asymétrique et
- la représentation et la disposition des autres objets graphiques (8-1, 8-3 à 8-7) changeant après une sélection de l'objet graphique mis en évidence (8-2) au moyen du dispositif d'entrée (4, 5, 6),
**caractérisé en ce que**
après une sélection de l'objet graphique mis en évidence (8-2), les autres objets graphiques (8-1, 8-3 à 8-7) sont représentés sous la forme d'un empilement visible derrière l'objet graphique mis en évidence (8-2).

8. Dispositif d'affichage (10) selon la revendication 7,
**caractérisé en ce que**
le dispositif d'entrée (4, 5, 6) comprend une surface tactile (4) sur une surface d'affichage (2) du dispositif d'affichage (1).

9. Dispositif d'affichage (10) selon la revendication 7 ou 8,
**caractérisé en ce que**
le dispositif d'entrée (4, 5, 6) comprend un dispositif (5) pour la détection et l'analyse d'un geste d'une partie du corps d'un utilisateur qui est effectué devant la surface d'affichage (2) du dispositif d'affichage (1).
